(19) Europäisches Patentamt
European Patent Office
Office européen des brevets

(11) **EP 4 443 732 A1**

(12) **EUROPEAN PATENT APPLICATION**
published in accordance with Art. 153(4) EPC

(43) Date of publication:
**09.10.2024 Bulletin 2024/41**

(21) Application number: **21966425.7**

(22) Date of filing: **03.12.2021**

(51) International Patent Classification (IPC):
**H02M 7/48** (2007.01)    **H02M 7/49** (2007.01)

(52) Cooperative Patent Classification (CPC):
**H02M 7/48; H02M 7/49;** Y02E 60/60

(86) International application number:
**PCT/JP2021/044448**

(87) International publication number:
**WO 2023/100344 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **NAKAMURA, Fuminori**
  **Tokyo 100-8310 (JP)**
• **KIKUCHI, Takeshi**
  **Tokyo 100-8310 (JP)**

(74) Representative: **Witte, Weller & Partner**
**Patentanwälte mbB**
**Postfach 10 54 62**
**70047 Stuttgart (DE)**

(54) **POWER CONVERSION DEVICE**

(57)    A power conversion device (1) includes: a power converter (2) that converts power between an alternating-current (AC) system (12) and a direct-current (DC) circuit (14); and a control device (3) that controls the power converter (2). The control device (3) includes: a command generation unit (609) for generating a reactive-current command value for the power converter (2) based on the AC voltage of the AC system (12) and an AC-voltage command value; and a fault determination unit (610) for determining presence or absence of a fault in the AC system (12) based on the AC voltage. When the fault occurs in the AC system (12) and cleared, the command generation unit (609) generates a reactive-current command value to limit the reactive current output from the power converter (2).

FIG.5

EP 4 443 732 A1

**Description**

TECHNICAL FIELD

The present disclosure relates to a power conversion device.

BACKGROUND ART

If a direct-current (DC) system and an alternating-current (AC) system are interconnected by a power converter, an automatic voltage regulator (AC-AVR) control is employed in the power converter, which maintains a constant AC voltage at the point of interconnection by controlling the leading or lagging reactive power. In this case, in the event of a system fault at the AC system, such as the ground fault on a transmission line, the AC voltage decreases. Due to this, the power converter outputs the leading reactive power, attempting to prevent a decrease in system voltage. However, as the system fault is cleared, despite the system voltage is restored instantly, the power converter continues to output the leading reactive power until the control responds. Consequently, the system voltage results in overvoltage transiently.

Japanese Patent Laying-Open No. H5-173654 (PTL 1) discloses a reactive-power control device that employs a self-commutated converter for use in the power system. The reactive-power control device is configured to detect, through a decrease in AC voltage, a fault on the AC system connected to the converter, and refine the upper limit for the limiter of the reactive-power control device, using the detection signal. With this configuration, in the event of a fault in the AC system connected to the self-commutated converter, the reactive-power control device employing the self-commutated converter inhibits development of overvoltage after the fault is cleared.

CITATION LIST

PATENT LITERATURE

PTL 1: Japanese Patent Laying-Open No. H5-173654

SUMMARY OF INVENTION

TECHNICAL PROBLEM

As noted above, in the reactive-power control device disclosed in PTL 1, in order to inhibit development of overvoltage in the AC system after the fault is cleared, a timer turns ON if a fault occurs in the AC system and the voltage decreases, and the reactive power is limited for a certain amount of time (e.g., a duration from the fault detection until the fault clearing plus a duration after the fault clearing until the transient disturbance converges). In this case, the reactive power is uniformly limited for a certain amount of time since the timer turns ON.

Thus, a constant voltage may not be maintained immediately after the fault is cleared and the system voltage is restored.

An object according to a certain aspect of the present disclosure is to provide a power conversion device that can maintain a constant system voltage immediately after the fault is cleared, while inhibiting the development of overvoltage immediately after the fault is cleared.

SOLUTION TO PROBLEM

A power conversion device according to a certain embodiment includes: a power converter that converts power between an alternating-current (AC) system and a direct-current (DC) circuit; and a control device that controls the power converter. The control device includes: a command generation unit for generating a reactive-current command value for the power converter based on the AC voltage of the AC system and an AC-voltage command value; and a fault determination unit for determining presence or absence of a fault in the AC system based on the AC voltage. If the fault occurs in the AC system and cleared, the command generation unit generates a reactive-current command value to limit the reactive current output from the power converter.

A power conversion device according to another embodiment includes: a power converter that converts power between an alternating-current (AC) system and a direct-current (DC) circuit; and a control device that controls the power converter. The control device includes: a command generation unit for generating a reactive-current command value for the power converter, based on an AC voltage of the AC system and an AC-voltage command value; and a fault determination unit for determining presence or absence of occurrence of a fault in the AC system, based on the AC voltage. The command generation unit: generates the reactive-current command value so that the AC voltage of the AC system follows the AC-voltage command value, until an elapse of a predetermined amount of time since the occurrence of the fault in the AC system; limits the reactive-current command value after the elapse of the predetermined amount of time; and cancels limiting the reactive-current command value, after the elapse of the predetermined amount of time and when the fault in the AC system has been cleared.

A power conversion device according to a still another embodiment includes: a power converter that converts power between an alternating-current (AC) system and a direct-current (DC) circuit; and a control device that controls the power converter. The control device includes: a command generation unit for generating a reactive-current command value for the power converter; and a fault determination unit for determining presence or absence of occurrence of a fault in the AC system, based on the AC voltage of the AC system. Upon the occurrence of the fault in the AC system, the command generation unit generates the reactive-current command value so that a lagging reactive current is output from the power converter, and when the fault occurred in the AC system has been cleared, the command generation unit shifts the reactive-current command value in a leading direction.

A power conversion device according to a still another embodiment includes: a power converter that converts power between an alternating-current (AC) system and a direct-current (DC) circuit; and a control device that controls the power converter. The control device includes a command generation unit for generating a reactive-current command value for the power converter. The command generation unit: generates, when the AC voltage is greater than or equal to a threshold, the reactive-current command value so that the AC voltage of the AC system follows an AC-voltage command value; and generates, when the AC voltage is less than the threshold, the reactive-current command value so that a lagging reactive current is output from the power converter.

ADVANTAGEOUS EFFECTS OF INVENTION

According to the power conversion device of the present disclosure, a constant system voltage can be maintained immediately after the fault is cleared, while inhibiting the development of overvoltage after the fault is cleared.

BRIEF DESCRIPTION OF DRAWINGS

Fig. 1 is a schematic configuration diagram of a power conversion device.
Fig. 2 is a circuit diagram showing one example of a sub module.
Fig. 3 is a block diagram showing one example of a hardware configuration of a control device.
Fig. 4 is a diagram depicting an internal configuration of the control device.
Fig. 5 is a diagram showing an internal configuration of a basic control unit.
Fig. 6 is a block diagram showing one example configuration of an alternating-current (AC) control unit.
Fig. 7 is a block diagram showing a configuration of a reactive-current command generation unit according to Embodiment 1.
Fig. 8 is a diagram for illustrating a relationship between a reactive current and a system voltage, according to Embodiment 1.
Fig. 9 is a block diagram showing a configuration of a reactive-current command generation unit according to a variation of Embodiment 1.
Fig. 10 is a block diagram showing a configuration of the reactive-current command generation unit according to another variation of Embodiment 1.
Fig. 11 is a block diagram showing a configuration of a reactive-current command generation unit according to Embodiment 2.
Fig. 12 is a diagram for illustrating a relationship between a reactive current and a system voltage, according to Embodiment 2.
Fig. 13 is a block diagram showing a configuration of a reactive-current command generation unit according to Embodiment 3.
Fig. 14 is a diagram for illustrating a relationship between a reactive current and a system voltage, according to Embodiment 3.
Fig. 15 is a block diagram showing a configuration of a reactive-current command generation unit according to Embodiment 4.
Fig. 16 is a diagram for illustrating a relationship between a reactive current and a system voltage, according to Embodiment 4.
Fig. 17 is a block diagram showing a configuration of a reactive-current command generation unit according to a variation of Embodiment 4.
Fig. 18 is a diagram for illustrating a relationship between an AC voltage and a reactive-current command value, according to the variation of Embodiment 4.

DESCRIPTION OF EMBODIMENTS

Hereinafter, embodiments are described, with reference to the accompanying drawings. In the following description, like reference signs refer to like parts. Their names and functionalities are the same. Thus, detailed description thereof will not be repeated.

Embodiment 1.

<Overall Configuration of Power Conversion Device>

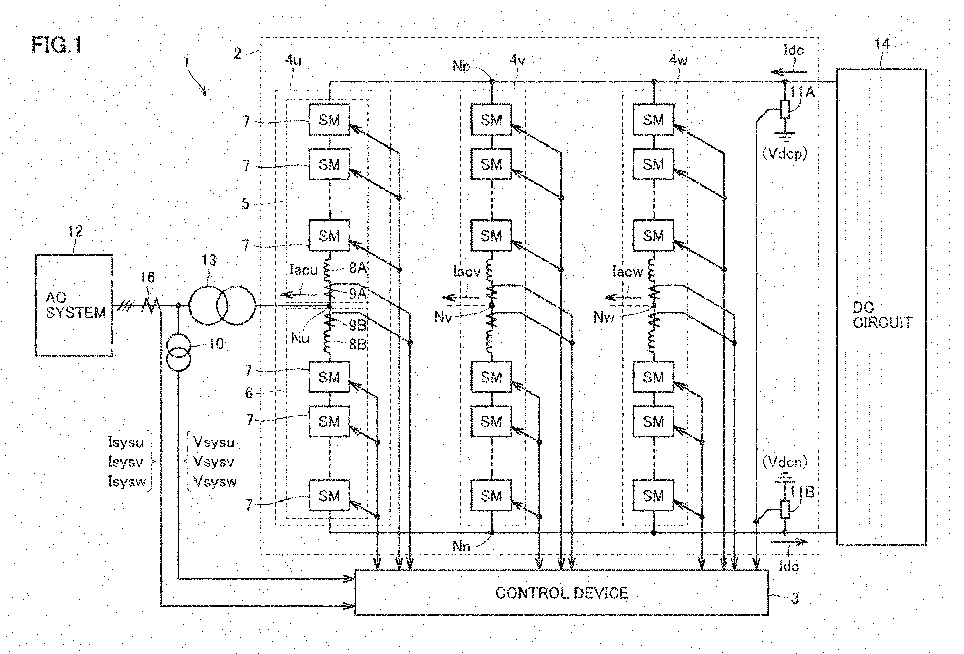

Fig. 1 is a schematic configuration diagram of a power conversion device. Referring to Fig. 1, a power conversion device 1 includes a power converter 2, and a control device 3 for controlling the power converter 2. The power converter 2 is configured of a modular multilevel converter which includes serially-connected multiple sub modules (corresponding to "SMs" of Fig. 1) 7. The "sub module" is also called a "transducer cell" or a "unit converter." The power converter 2 is connected between a direct-current (DC) circuit 14 and a polyphase (e.g., a three-phase) alternating-current (AC) system 12.

The power converter 2 includes multiple leg circuits 4u, 4v, and 4w (hereinafter, also referred, collectively, to as a "leg circuit 4") that are connected in parallel between a positive DC terminal (i.e., a high-potential side DC terminal) Np and a negative DC terminal (i.e., a low-potential side DC terminal) Nn.

The leg circuit 4 is provided for each phase of the polyphase alternating current, connected between the AC system 12 and the DC circuit 14, and converts power between the circuits. Fig. 1 shows the AC system 12 as a three-phase AC system, provided with three leg circuits 4u, 4v, and 4w for the u phase, v phase, and w phase, respectively.

AC terminals Nu, Nv, and Nw respectively included in the leg circuits 4u, 4v, and 4w are connected to the AC system 12 via a transformer 13. The AC system 12 is, for example, an AC power system, including an AC power supply, etc. In Fig. 1, for ease of illustration, the connection between the AC terminals Nv and Nw and the transformer 13 is not shown. The DC terminals (i.e., the positive DC terminal Np, the negative DC terminal Nn) commonly included in each leg circuit 4 are connected to the DC circuit 14. The DC circuit 14 is, for example, a DC power system, including a DC power grid, or a DC terminal of other power conversion device. The leg circuit 4u will be representatively described below since the leg circuits 4v and 4w have the same configuration as the leg circuit 4u.

The leg circuit 4u includes an upper arm 5 extending from the positive DC terminal Np to the AC terminal Nu, and a lower arm 6 extending from the negative DC terminal Nn to the AC terminal Nu. The AC terminal Nu, which is a point of connection between the upper arm 5 and the lower arm 6, is connected to the transformer 13. The positive DC terminal Np and the negative DC terminal Nn are connected to the DC circuit 14.

The upper arm 5 includes multiple cascade-connected sub modules 7, and a reactor 8A. In the upper arm 5, the sub modules 7 and the reactor 8A are connected in series. Similarly, the lower arm 6 includes multiple cascade-connected sub modules 7, and a reactor 8B. In the lower arm 6, the sub modules 7 and the reactor 8B are connected in series.

The reactor 8A may be disposed anywhere in the upper arm 5 of the leg circuit 4u, and the reactor 8B may be disposed anywhere in the lower arm 6 of the leg circuit 4u. Multiple reactors 8A and multiple reactors 8B may be included. The reactors may have different inductance values. Only the reactor 8A in the upper arm 5 may be provided, or only the reactor 8B in the lower arm 6 may be provided.

Instead of using the transformer 13, the leg circuits 4u, 4v, and 4w may be connected to the AC system 12 via an interconnection reactor. Furthermore, instead of the AC terminals Nu, Nv, and Nw, the primary winding may be included in each of the leg circuits 4u, 4v, and 4w, and the leg circuits 4u, 4v, and 4w may be connected to the transformer 13 or an interconnection reactor in an AC manner via the secondary winding magnetically coupled to the primary winding. In other words, the leg circuit 4 may have any configuration, insofar as the leg circuit 4 is electrically (i.e., a DC manner or an AC manner) connected to the AC system 12 via connectors, such as the AC terminals Nu, Nv, and Nw and the primary winding, which are included in each of the leg circuits 4u, 4v, and 4w.

The power conversion device 1 includes an AC-voltage detector 10, an AC-current detector 16, DC-voltage detectors 11A and 11B, and arm-current detectors 9A and 9B included in each of the leg circuit 4, as detectors for measuring the electrical quantities (e.g., current, voltage, etc.) which are used for a control. Signals are detected by these detectors and input to the control device 3.

Based on the signals detected by the detectors, the control device 3 outputs gate control signals for controlling the operations of the respective sub modules 7. For example, the gate control signals are pulse width modulation (PWM) signals.

The AC-voltage detector 10 detects a U-phase AC voltage Vsysu, a V-phase AC voltage Vsysv, and a W-phase AC voltage Vsysw of the AC system 12. In the following description, Vsysu, Vsysv, and Vsysw may also be, collectively described as Vsys. AC voltages Vacu, Vacv, and Vacw at the AC terminals Nu, Nv, and Nw of the power converter 2 correspond to the secondary-side voltage of the transformer 13 (i.e., the voltage on the power converter 2 side). Therefore, the AC voltages Vacu, Vacv, and Vacw can be obtained from the AC voltages Vsysu, Vsysv, and Vsysw detected by the AC-voltage detector 10, in view of the transformation ratio of the transformer 13, the impedance drop, and the connection scheme. If an interconnection reactor is used instead of the transformer 13, the AC voltages Vacu, Vacv, and Vacw can be obtained from the AC voltages Vsysu, Vsysv, and Vsysw, in view of the reactance of the interconnection reactor. In the following description, Vacu, Vacv, and Vacw will also, collectively, be described as Vac. In the present embodiment, the control device 3 performs a control using the AC voltage Vsys. However, the control device 3 may, instead, performs a control using the AC voltage Vac.

The AC-current detector 16 detects a U-phase AC current Isysu, a V-phase AC current Isysv, and a W-phase AC current Isysw of the AC system 12. In the following description, Isysu, Isysv, and Isysw will also, collectively, be described as Isys.

A U-phase AC current Iacu , a V-phase AC current Iacv, and a W-phase AC current Iacw that are output from the power converter 2 to the AC system 12 will also, collectively, be described as an AC current Iac. The AC current Iac corresponds to the secondary-side current of the transformer 13 (i.e., the current on the power converter 2 side). In Fig. 1, the AC-current detector 16 detects the AC current Isys, which is the primary-side current of the transformer 13 (i.e., the current on the AC system 12 side). However, the AC-current detector 16 may detect the AC current Iac, which is the secondary-side current of the transformer 13. The AC current Iac can also be obtained in view of the AC current Isys, the transformation ratio of the transformer 13, and the connection scheme. If an interconnection reactor is used instead of the transformer 13, the AC current Iac and the AC current Isys match. In the present embodiment, the control device 3 uses both the AC current Iac and the AC current Isys to perform a control. However, the control device 3 may use only the AC current Isys or only the AC current Iac to perform a control.

The DC-voltage detector 11A detects a DC voltage Vdcp at the positive DC terminal Np connected to the DC circuit 14. The DC-voltage detector 11B detects a DC voltage Vdcn at the negative DC terminal Nn connected to the DC circuit 14. The difference between the DC voltage Vdcp and the DC voltage Vdcn will be referred to as a DC voltage Vdc.

The arm-current detectors 9A and 9B, included in the leg circuit 4u for U phase, detect an upper-arm current Ipu flowing through the upper arm 5 and a lower-arm current Inu flowing through the lower arm 6, respectively. Similarly, the arm-current detectors 9A and 9B, included in the leg circuit 4v for V phase, detect an upper-arm current Ipv and a lower-arm current Inv, respectively. The arm-current detectors 9A and 9B, included in the leg circuit 4w for W phase, detect an upper-arm current Ipw and a lower-arm current Inw, respectively.

<Configuration of Sub Module>

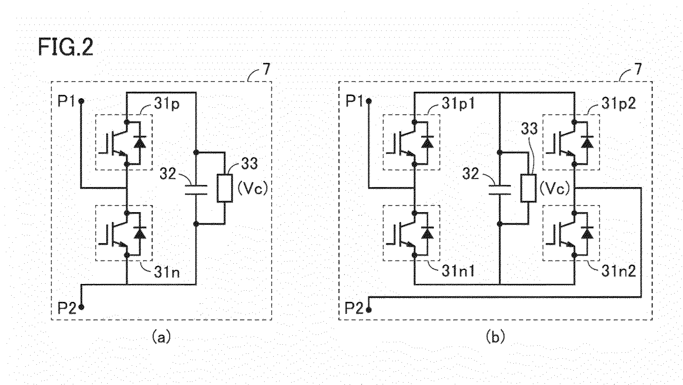

Fig. 2 is a circuit diagram showing one example of the sub module. The sub module 7 shown in (a) of Fig. 2 has a circuit structure called a half-bridge configuration. The sub module 7 includes a series body formed of two switching elements 31p and 31n being connected in series, a capacitor 32 as an energy storage, and a voltage detector 33. The series body and the capacitor 32 are connected in parallel. The voltage detector 33 detects a voltage Vc, which is a voltage across the capacitor 32.

The sub module 7 shown in (b) of Fig. 2 has a circuit structure called a bridge configuration. The sub module 7 includes a first series body formed of two switching elements 31p1 and 31n1 being connected in series, a second series body formed of two switching elements 31p2 and 31n2 being connected in series, the capacitor 32, and the voltage detector 33. The first series body, the second series body, and the capacitor 32 are connected in parallel. The voltage detector 33 detects the voltage Vc.

The two switching elements 31p and 31n in (a) of Fig. 2 and the four switching elements 31p1, 31n1, 31p2, and 31n2 in (b) of Fig. 2 are configured of, for example, a freewheeling diode being connected in anti-parallel to a self turn-off semiconductor switching element such as an IGBT, a GCT thyristor or a metal oxide semiconductor field-effect transistor (MOSFET). In (a) and (b) of Fig. 2, a capacitor such as a film capacitor is mainly used as the capacitor 32.

In the following description, the switching elements 31p, 31n, 31p1, 31n1, 3 1p2, and 31n2 will also be, collectively, referred to as a switching element 31. The on/off of a semiconductor switching element included in the switching element 31 is also described simply as "on/off of the switching element 31."

Referring to (a) of Fig. 2, the opposing terminals of the switching element 31n are input/output terminals P1 and P2. A voltage across the capacitor 32 and zero voltage are output by switching operations of the switching elements 31p and 31n. For example, the voltage across the capacitor 32 is output when the switching element 31p is on and the switching element 31n is off. Zero voltage is output when the switching element 31p is off and the switching element 31n is on.

Next, referring to (b) of Fig. 2, the mid-point between the switching element 31p1 and the switching element 31n1, and the mid-point between the switching element 31p2 and the switching element 31n2 are the input/output terminals P1 and P2, respectively, of the sub module 7. The sub module 7 shown in (b) of Fig. 2 outputs a positive voltage or zero voltage by turning the switching element 31n2 on, the switching element 31p2 off, and alternately turning the switching elements 31p1 and 31n1 on. The sub module 7 shown in (b) of Fig. 2 can also output zero voltage or a negative voltage by turning the switching element 31n2 off, the switching element 31p2 on, and alternately turning the switching elements 31p1 and 31n1 on.

The following description is provided with reference to the sub module 7 as having the half-bridge configuration shown in (a) of Fig. 2 using and a semiconductor switching element, and a capacitor as the energy storage element. However, the sub module 7 may have the full-bridge configuration shown in (b) of Fig. 2. Moreover, any sub module having a configuration other than those described above may be used, for example, a sub module having a circuit structure, called a 1.5 half-bridge configuration applied thereto, in which the switching element 31p2 of (b) of Fig. 2 is replaced with a diode only.

<Hardware Configuration Example of Control Device>

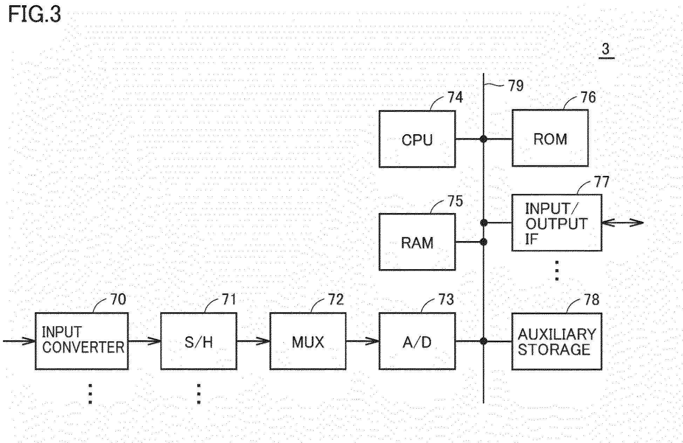

Fig. 3 is a block diagram showing one hardware configuration example of the control device 3. Fig. 3 shows an example in which the control device 3 is configured of a computer.

The control device 3 includes one or more input converters 70, one or more sample and hold circuits 71, a multiplexer (MUX) 72, and an analog to digital (A/D) converter 73. The control device 3 further includes one or more central processing units (CPU) 74, a random access memory (RAM) 75, and a read only memory (ROM) 76. The control device 3 further includes one or more input/output (I/O) interfaces 77, an auxiliary storage 78, and a bus 79 connecting the above components.

The input converter 70 has an auxiliary transformer for each input channel. Each auxiliary transformer transforms the detection signal detected by a respective electrical quantity detector of Fig. 1 into a signal having a voltage level suited for the subsequent signal processing.

The sample and hold circuit 71 is included in each input converter 70. The sample and hold circuit 71 samples and holds, at a predetermined sampling frequency, the signal representing the electrical quantity received from a corresponding input converter 70.

The multiplexer 72 successively selects the signals held by the sample and hold circuits 71. The A/D converter 73 converts the signal selected by the multiplexer 72 into a digital value. Note that multiple A/D converters 73 may be included and the analog-to-digital conversion may be performed in parallel on the detection signals from multiple input channels.

The CPU 74 provides an overall control of the control device 3, and performs arithmetic processes according to programs. The RAM 75 as a volatile memory and the ROM 76 as a nonvolatile memory are used as primarily storages for the CPU 74. The ROM 76 stores programs, and settings values for the signal processing. The auxiliary storage 78 is a nonvolatile memory that has a larger capacity than the ROM 76, and stores programs, and data such as the electrical quantity detection values.

The I/O interface 77 is an interface circuit for communications between the CPU 74 and external devices.

Note that at least part of the control device 3 may be configured using circuits such as a field programmable gate array (FPGA) and an application specific integrated circuit (ASIC). The least part of the control device 3 can be configured of an analog circuit.

<Functional Configuration Example of Control Device>

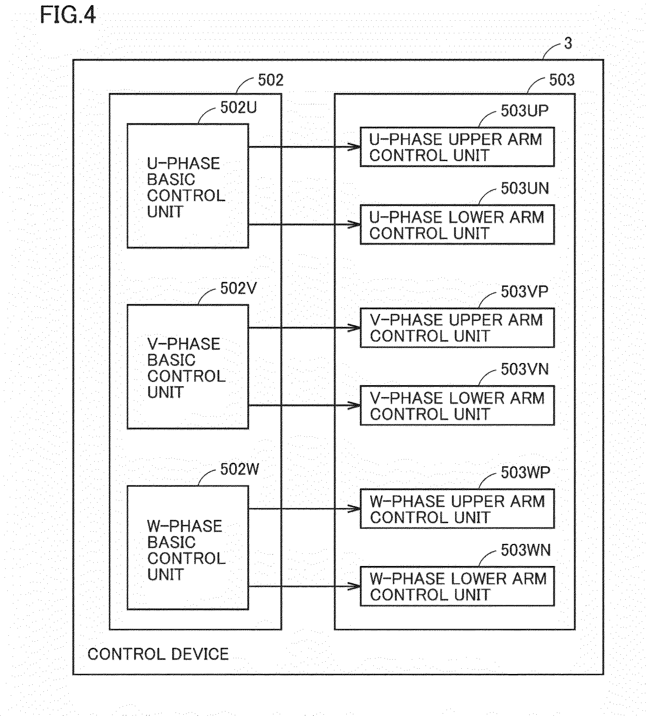

Fig. 4 is a diagram depicting an internal configuration of the control device 3. Referring to Fig. 4, the control device 3 includes a basic control unit 502 and an arm control unit 503. The basic control unit 502 includes a U-phase basic control unit 502U, a V-phase basic control unit 502V, and a W-phase basic control unit 502W. The arm control unit 503 includes a U-phase upper arm control unit 503UP, a U-phase lower arm control unit 503UN, a V-phase upper arm control unit 503VP, a V-phase lower arm control unit 503VN, a W-phase upper arm control unit 503WP, and a W-phase lower arm control unit 503WN.

The configurations of the basic control unit 502 and the arm control unit 503 are each implemented in a processing circuit, for example. The processing circuit may be dedicated hardware or the CPU 74 for executing the programs stored in an internal memory of the control device 3. If the processing circuit is dedicated hardware, the processing circuit is configured of a FPGA, an ASIC, or a combination thereof, for example.

Using the electrical quantities measured by the respective detectors, the basic control unit 502 generates two arm-voltage command values Krefp and Krefn for the upper arm 5 and the lower arm 6 for each phase, a capacitor-voltage command value Vcrefp for the upper arm 5 for each phase, and a capacitor-voltage command value Vcrefn for the lower arm 6 for each phase. In the following description, where the arm is not specified for the arm-voltage command value and the capacitor-voltage command value, the arm-voltage command value and the capacitor-voltage command value will be simply described as an arm-voltage command value Kref and a capacitor-voltage command value Vcref.

Based on the arm-voltage command value Kref and the capacitor-voltage command value Vcref for each arm for each phase, the arm control unit 503 generates a gate control signal GP for controlling on and off of the switching elements 31p and 31n included in each sub module 7 of the arm, and outputs the gate control signal GP to the respective sub module 7. Typically, the arm control unit 503 compares the final arm-voltage command value, generated based on the arm-voltage command value Kref and the capacitor-voltage command value Vcref, with a carrier signal, and, based on a result of the comparison, generates the gate control signal GP as a PWM signal. For example, a triangular wave is used as the carrier signal.

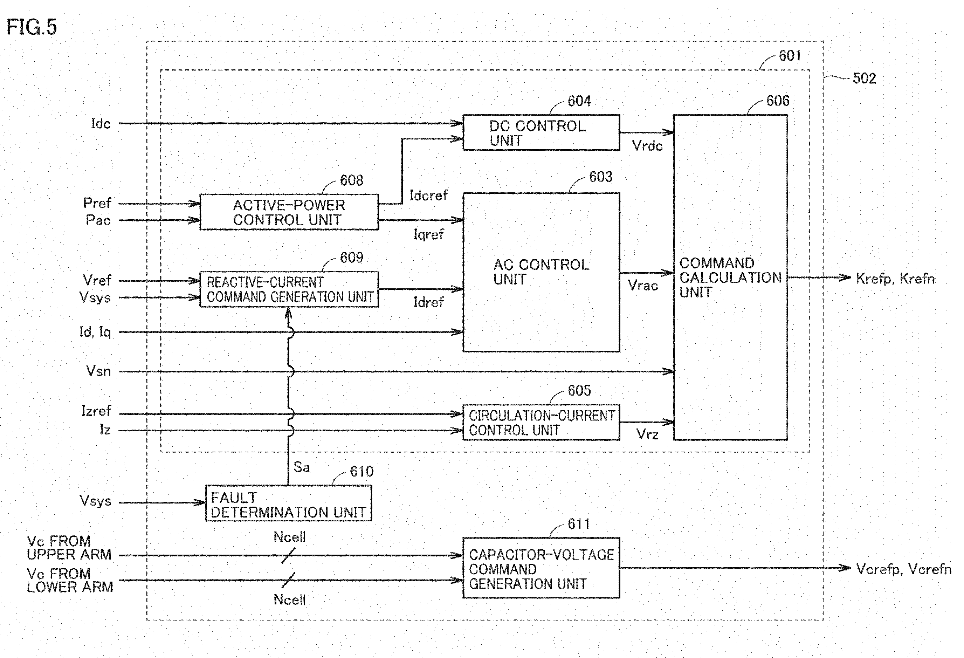

Fig. 5 is a diagram showing an internal configuration of the basic control unit 502. Referring to Fig. 5, the basic control unit 502 outputs the arm-voltage command value Krefp for the upper arm 5 for each phase, the arm-voltage command value Krefn for the lower arm 6 for each phase, the capacitor-voltage command value Vcrefp for the upper arm 5 for each phase, and the capacitor-voltage command value Vcrefn for the lower arm 6 for each phase. Specifically, the basic control unit 502 includes an arm-current command generation unit 601 and a capacitor-voltage command generation unit 611.

The capacitor-voltage command generation unit 611 receives the voltage Vc at the capacitor 32 of the sub module 7 included in the upper arm 5, and receives the voltage Vc at the capacitor 32 of the sub module 7 included in the lower arm 6.

The capacitor-voltage command generation unit 611 calculates the capacitor-voltage command value Vcrefp for the capacitor 32 of the sub module 7 included in the upper arm 5. The capacitor-voltage command generation unit 611 calculates the capacitor-voltage command value Vcrefn for the capacitor 32 of the sub module 7 included in the lower arm 6. For example, the capacitor-voltage command value Vcrefp is an average voltage at the capacitor 32 of the sub module 7 included in the upper arm 5, and the capacitor-voltage command value Vcrefn is an average voltage at the capacitor 32 of the sub module 7 included in the lower arm 6.

A fault determination unit 610 determines the presence or absence of a fault in the AC system 12, based on the AC voltage Vsys of the AC system 12 (i.e., the system voltage of the AC system 12). Specifically, if the AC voltage Vsys is less than a threshold Th, the fault determination unit 610 determines that a fault has occurred in the AC system 12. If the AC voltage Vsys is greater than or equal to the threshold Th, the fault determination unit 610 determines that no fault has occurred in the AC system 12 (or a fault is cleared). The fault determination unit 610 outputs a determination signal Sa indicative of a result of the determination to the reactive-current command generation unit 609. For example, if determined that a fault has occurred in the AC system 12, the fault determination unit 610 outputs the determination signal Sa having a value "1," and, if determined that no fault occurred in the AC system 12, the fault determination unit 610 outputs the determination signal Sa having a value "0." Note that a short time constant is desirable for a low-pass filter that is usually used by the fault determination unit 610 to clear noise.

The arm-current command generation unit 601 calculates the arm-voltage command value Krefp for the upper arm 5, and the arm-voltage command value Krefn for the lower arm 6. Specifically, the arm-current command generation unit 601 includes an AC control unit 603, a DC control unit 604, a circulation-current control unit 605, a command calculation unit 606, an active-power control unit 608, and a reactive-current command generation unit 609.

The active-power control unit 608 performs the feedback control for reducing the deviation between an active power command value Pref and the active power Pac to zero to generate an active-current command value Iqref. The active-current command value Iqref is a command value for the active current that is output from the power converter 2. The active power Pac is computed based on the AC voltage Vsys and the AC current Isys described with respect to Fig. 1. The active power command value Pref is previously set by the system operator, for example. Note that a DC-current command value Idcref is generated through predetermined computation for translating the active power command value Pref into a DC-current command value.

The DC control unit 604 performs a direct-current control for causing a DC current Idc to follow the DC-current command value Idcref. Specifically, the DC control unit 604 performs the feedback control for reducing the deviation between the DC-current command value Idcref and the DC current Idc to zero to generate a DC control command value Vrdc. The DC current Idc is computed, using the respective arm currents.

Based on the AC voltage Vsys of the AC system 12 (i.e., the system voltage of the AC system 12) and an AC-voltage command value Vref (i.e., a system-voltage command value), the reactive-current command generation unit 609 generates a reactive-current command value Idref for the power converter 2. In a certain aspect, if a fault occurred in the AC system 12 is cleared, the reactive-current command generation unit 609 generates the reactive-current command value Idref so that the reactive current output from the power converter 2 is limited. A specific configuration of the reactive-current command generation unit 609 will be described below.

Based on an active current Iq output from the power converter 2, a reactive current Id output from the power converter 2, the active-current command value Iqref, and the reactive-current command value Idref, the AC control unit 603 generates an active-voltage command value Vracq and a reactive-voltage command value Vracd. Note that the active current Iq and the reactive current Id are calculated based on the AC currents Iacu, Iacv, and Iacw of the respective phases.

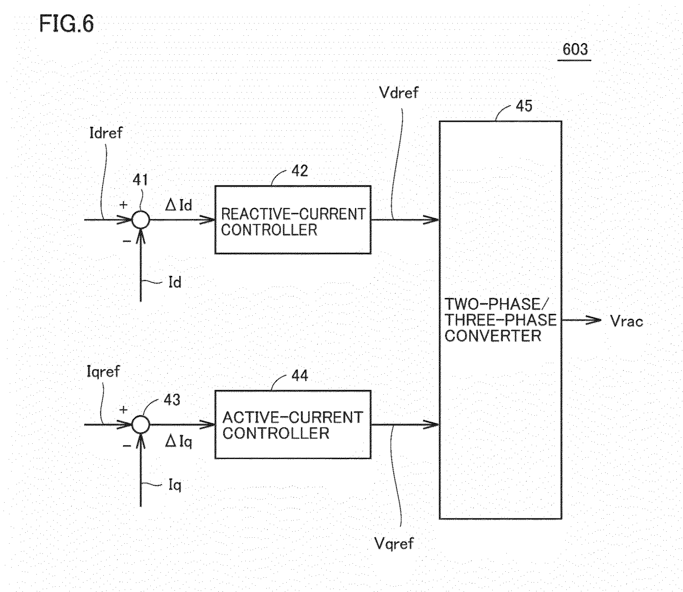

Fig. 6 is a block diagram showing one example configuration of the AC control unit 603. Referring to Fig. 6, the AC control unit 603 includes subtractors 41 and 43, a reactive-current controller 42, an active-current controller 44, and a two-phase/three-phase converter 45.

The subtractor 41 calculates a deviation ΔId between the reactive-current command value Idref and the reactive current Id. The reactive-current controller 42 generates a reactive-voltage command value Vdref for controlling the reactive voltage output from the power converter 2 to reduce the deviation ΔId to zero. The reactive-current controller 42 may be configured as a PI controller for performing the proportional operation and integration operation on ΔId, or as a PID controller for further performing the differential operation on ΔId. The reactive-current controller 42 may also be configured as other controller used for the feedback control. As a result, the feedback control is performed so that the reactive current Id is equal to the reactive-current command value Idref.

The subtractor 43 calculates a deviation ΔIq between the active-current command value Iqref and the active current Iq. The active-current controller 44 generates an active-voltage command value Vqref for controlling the active voltage output from the power converter 2 so that the deviation ΔIq reduces to zero. The active-current controller 44 can be configured as a PI controller, a PID controller, or other controller used for the feedback control. As a result, the feedback control is performed so that the active current Iq is equal to the active-current command value Iqref.

The two-phase/three-phase converter 45 generates an AC-voltage command value Vrac for three phases (i.e., U phase, V phase, W phase) from the active-voltage command value Vqref and the reactive-voltage command value Vdref through coordinate transformation. The coordinate transformation performed by the two-phase/three-phase converter 45 is implemented by inverse Park transformation and inverse Clarke transformation, for example. Alternatively, the coordinate transformation performed by the two-phase/three-phase converter 45 may be implemented by inverse Park transformation and space vector transformation.

Referring, again, to Fig. 5, the circulation-current control unit 605 calculates a circulation control command value Vrz for controlling a circulating current Iz so that the circulating current Iz follows a pre-set circulating-current command value Izref (e.g., zero). Note that a U-phase circulating current Izu, a V-phase circulating current Izv, and a W-phase circulating current Izw, which flow through the closed circuit of the power converter 2, not including the AC system 12 and the DC circuit 14 on the path, are represented by the following equations (1), (2), and (3), using the respective arm currents and the DC current Idc:

$$Izu = (Ipu + Inu) / 2 - Idc / 3 \ldots (1)$$

$$Izv = (Ipv + Inv) / 2 - Idc / 3 \ldots (2)$$

$$Izw = (Ipw + Inw) / 2 - Idc / 3 \ldots (3)$$

The command calculation unit 606 receives the AC-voltage command value Vrac, the circulation control command value Vrz, the DC control command value Vrdc, and a neutral voltage Vsn. Based on these inputs, the command calculation unit 606 calculates the voltage at which the power is shared between the upper arm 5 and the lower arm 6. The command calculation unit 606 subtracts the voltage drops caused by the inductance components within the upper arm 5 and the lower arm 6 from the calculated voltage to determine the arm-voltage command value Krefp for the upper arm 5 and the arm-voltage command value Krefn for the lower arm 6.

<Control Scheme for Reactive Current>

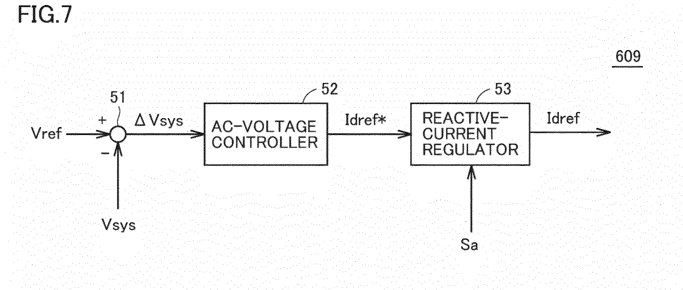

Fig. 7 is a block diagram showing a configuration of the reactive-current command generation unit according to Embodiment 1.

Referring to Fig. 7, the reactive-current command generation unit 609 includes a subtractor 51, an AC-voltage controller 52, and a reactive-current regulator 53. The subtractor 51 calculates a deviation ΔVsys between the AC-voltage command value Vref and the AC voltage Vsys.

The AC-voltage controller 52 generates a reactive-current command value Idref* for controlling the reactive current output from the power converter 2 so that the AC voltage Vsys of the AC system 12 follows the AC-voltage command value Vref. Specifically, the AC-voltage controller 52 generates the reactive-current command value Idref* so that the deviation ΔVsys reduces to zero. The AC-voltage controller 52 may be configured as a PI controller that performs the proportional operation and integration operation on the deviation ΔVsys, or a PID controller that further performs the differential operation. The AC-voltage controller 52 may also be configured as other controller used for the feedback control.

The reactive-current regulator 53 outputs the final reactive-current command value Idref by limiting, based on the determination signal Sa indicative a result of determination by the fault determination unit 610, the reactive-current command value Idref*, generated by the AC-voltage controller 52, within a limit range. In other words, if the reactive-current command value Idref* deviates from the limit range (i.e., a lower limit: Idd, an upper limit: Idu), the reactive-current regulator 53 generates the reactive-current command value Idref by limiting the reactive-current command value Idref* to the lower limit Idd or the upper limit Idu. Typically, the reactive-current regulator 53 limits the reactive-current command value Idref* within the limit range if a fault occurred in the AC system 12 is cleared (e.g., if the value of the determination signal Sa changes from "1" to "0").

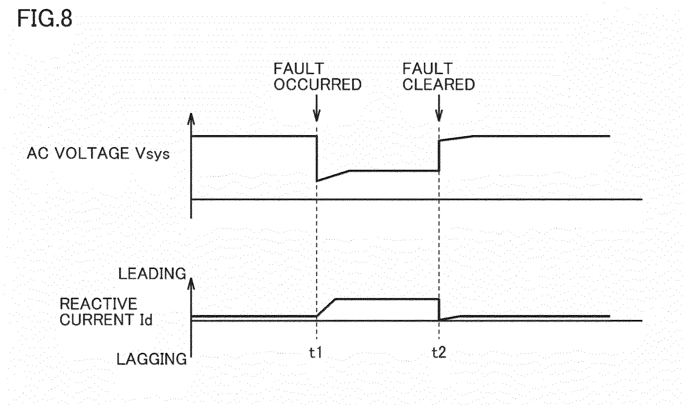

Fig. 8 is a diagram for illustrating a relationship between the reactive current and the system voltage, according to Embodiment 1. Referring to Fig. 8, before arriving at time t1 at which a fault occurs, the AC voltage Vsys is maintained at a constant value (e.g., the rated voltage value), following the AC-voltage command value Vref. At this time, the reactive current Id is nearly zero.

In the event of a fault at time t1, the AC voltage Vsys rapidly decreases. The fault determination unit 610 determines that the fault is cleared and outputs the determination signal Sa having a value of "1." With the reduction of the AC voltage Vsys, the AC-voltage controller 52 generates the reactive-current command value Idref (i.e., a positive reactive-current command value Idref). The reactive-current regulator 53 sets the upper limit of the limit range to +∞, and sets the lower limit to -∞. In other words, since the reactive-current regulator 53 does not limit the reactive-current command value, Idref,* Idref* = Idref holds true. Accordingly, a leading reactive current Id is output (i.e., leading reactive power is output) from the power converter 2 in accordance with the reactive-current command value Idref, as shown in Fig. 8, and the AC voltage Vsys thereby increases.

The fault is cleared at time t2. The fault determination unit 610 determines that the fault is cleared, and outputs the determination signal Sa having a value of "0." Upon receiving an input of the determination signal Sa having a value of "0," the reactive-current regulator 53 sets the limit range to less than or equal to a predetermined value Ix. The predetermined value Ix is zero or a small positive value. Specifically, the upper limit Idu is set to the predetermined value Ix, and the lower limit Idd is set to -∞. Therefore, the limit range can include a small positive value, zero, and a negative value.

Immediately after the fault is cleared, the AC-voltage controller 52 generates a relatively great, positive reactive-current command value Idref* (i.e., greater than the predetermined value Ix), due to the control lag. However, since the limit range is set less than or equal to the predetermined value Ix, the reactive-current regulator 53 outputs the reactive-current command value Idref where a positive reactive-current command value Idref* is limited to the predetermined value Ix (i.e., the reactive-current command value Idref corresponding to the predetermined value Ix). Consequently, the reactive current Id output from the power converter 2 results in nearly zero, as shown in Fig. 8. Therefore, the development of overvoltage of the AC voltage Vsys can be prevented. Note that the limit range may be set to zero. In this case, since the upper limit Idu and the lower limit Idd are set to zero, the reactive-current command value Idref having a value of "0" is output.

In a certain aspect, the reactive-current regulator 53 limits the reactive-current command value Idref* within the limit range that is set to the predetermined value Ix or less until the predetermined amount of time T1 elapses since the fault in the AC system 12 has been cleared. Due to this, the reactive current Id is nearly zero until the elapse of the predetermined amount of time T1. Then, after the elapse of the predetermined amount of time T1, the reactive-current regulator 53 returns the upper limit to +∞, the lower limit to -∞, thereby cancelling the limit for the reactive-current command value Idref*. Therefore, Idref* = Idref holds true, and the reactive current Id is output from the power converter 2, in accordance with the reactive-current command value Idref. This causes the AC voltage Vsys to converge to the AC-voltage command value Vref (i.e., the rated voltage value), maintaining a constant system voltage after the fault is cleared.

As noted above, by maintaining the reactive current Id around zero for the predetermined amount of time T1 after the fault is cleared, the leading reactive current Id can be prevented from being output due to the control lag of the power converter 2. This can more appropriately prevent the AC voltage Vsys from resulting in overvoltage.

In other aspect, the reactive-current regulator 53 sets the limit range to the predetermined value Ix or less if a fault in the AC system 12 is cleared, and subsequently, gradually increases over time the upper limit Idu for the limit range. In this case, after the fault is cleared, the reactive current Id gradually increases from around zero, thereby preventing the leading reactive current Id from being output due to the control lag of the power converter 2. This configuration can also more appropriately prevent the development of overvoltage of the AC voltage Vsys.

(Variation)

The example of Fig. 7 has been described with respect to the configuration in which the reactive-current command value Idref* output from the AC-voltage controller 52 is limited after the fault is cleared. However, elements included in the AC-voltage controller 52 may be reset after the fault is cleared.

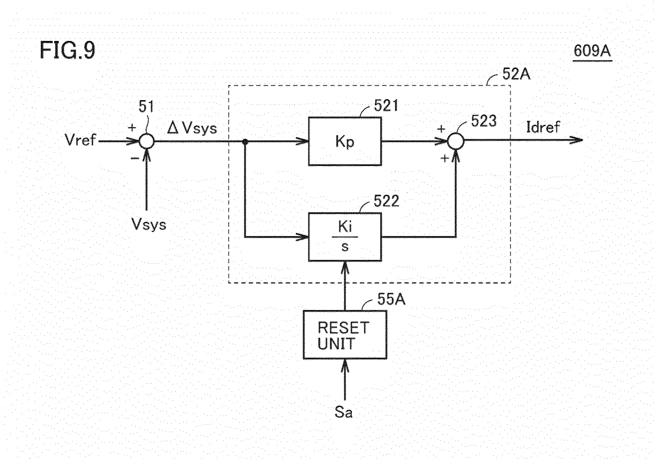

Fig. 9 is a block diagram showing a configuration of a reactive-current command generation unit according to a variation of Embodiment 1. Referring to Fig. 9, a reactive-current command generation unit 609A includes the subtractor 51, an AC-voltage controller 52A, and a reset unit 55A. The subtractor 51 calculates the deviation ΔVsys between the AC-voltage command value Vref and the AC voltage Vsys.

The AC-voltage controller 52A includes a proportioner 521, an integrator 522, and an adder 523. The proportioner 521 corresponds to a "proportional element" in the control operation, and the integrator 522 corresponds to an "integral element" in the control operation. The AC-voltage controller 52A is configured of a feedback controller (e.g., a PI controller) which includes the proportional element and the integral element.

The proportioner 521 outputs, as a proportional term to the adder 523, a value obtained by multiplying the deviation ΔVsys received from the subtractor 51 by the proportional gain Kp. The integrator 522 outputs, as an integral term to the adder 523, a value obtained by multiplying a value, obtained by integrating the deviation ΔVsys over time, by a gain Ki. The adder 523 adds the proportional term (e.g., Kp*ΔId) and the integral term (e.g., Ki*Σ (ΔId)) to generate the reactive-current command value Idref.

Based on the determination signal Sa, the reset unit 55A resets the integration value of the integrator 522. Specifically, if a fault occurred in the AC system 12 is cleared, the integral term of the integrator 522 is set to zero. This causes the reset unit 55A to limit the reactive-current command value Idref.

According to the configuration of Fig. 9, a leading component corresponding to the leading reactive current output during the fault is reset instantly after the fault is cleared, and the reactive-current command value Idref is limited. Subsequently, based on the deviation ΔVsys between the AC voltage Vsys, having increased due to the fault clearing, and the AC-voltage command value Vref, the AC-voltage controller 52 performs a typical feedback process (i.e., the PI control process). This causes the reactive current Id according to the reactive-current command value Idref to be output. Accordingly, the AC voltage Vsys can be caused to converge to the AC-voltage command value Vref and a constant system voltage can be maintained after the fault is cleared, while inhibiting the development of overvoltage of the AC voltage Vsys, as shown in Fig. 8.

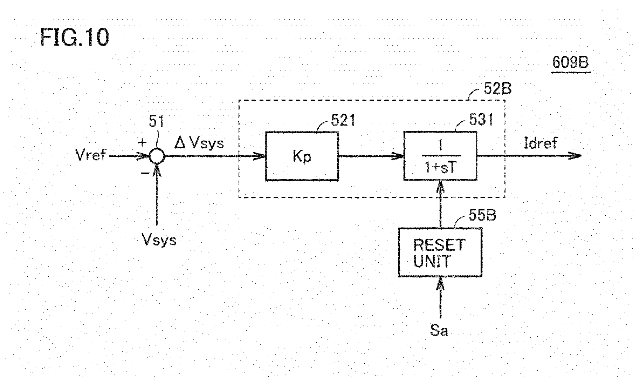

Fig. 10 is a block diagram showing a configuration of a reactive-current command generation unit according to another variation of Embodiment 1. Referring to Fig. 10, a reactive-current command generation unit 609B includes the subtractor 51, an AC-voltage controller 52B, and a reset unit 55B. The subtractor 51 calculates the deviation ΔVsys between the AC-voltage command value Vref and the AC voltage Vsys.

The AC-voltage controller 52B includes the proportioner 521 and a first-order lag controller 531. The proportioner 521 outputs to the first-order lag controller 531 a value obtained by multiplying the deviation ΔVsys received from the subtractor 51 by the proportional gain Kp. The first-order lag controller 531 is a filter that is represented by a transfer function G (= 1 / (1 + sT)). The first-order lag controller 531 subjects the value output from the proportioner 521 to a filtering process (i.e., a primary lag process) by the transfer function G, and outputs the reactive-current command value Idref.

Based on the determination signal Sa, the reset unit 55B resets the filtering function of the first-order lag controller 531. Specifically, if a fault occurred in the AC system 12 is cleared, the reset unit 55B resets the filtering function. In this case, the first-order lag controller 531 outputs the output value of the proportioner 521 as the reactive-current command value Idref, without subjecting the output value to the filtering process. Subsequently, the first-order lag controller 531 instantly resumes the filtering process, subjects the output value of the proportioner 521 to the filtering process, and outputs the reactive-current command value Idref.

According to the configuration of Fig. 10, similarly to the configuration of Fig. 9, the leading component corresponding to the leading reactive current output during the fault is reset instantly after the fault is cleared, and the reactive-current command value Idref* is limited. Subsequently, the typical processes (i.e., processes by the proportioner 521 and the first-order lag controller 531) on the AC-voltage controller 52B based on the deviation ΔVsys resumes, and the reactive current Id according to the reactive-current command value Idref is output. Accordingly, the AC voltage Vsys can be caused to converge to the AC-voltage command value Vref and a constant system voltage can be maintained after the fault is cleared, while inhibiting the development of overvoltage of the AC voltage Vsys, as shown in Fig. 8.

<Advantageous Effects>

According to Embodiment 1, a constant system voltage can be maintained as much as possible during a fault, and the development of overvoltage upon clearance of the fault can be prevented. Moreover, a constant AC voltage Vsys can be maintained after the fault is cleared.

Embodiment 2.

Embodiment 2 is now described in which a reactive-current command value Idref is generated, in view of the system status of an AC system 12 when a fault is cleared. Embodiment 2 differs from Embodiment 1 in configuration of the reactive-current command generation unit.

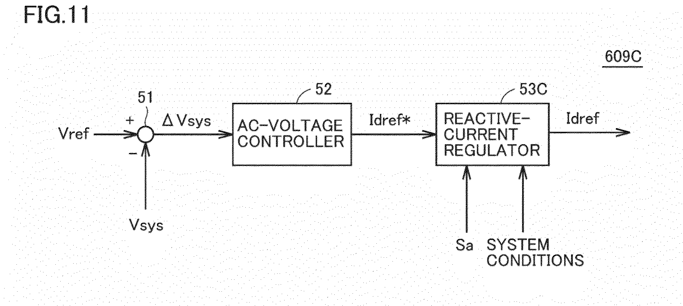

Fig. 11 is a block diagram showing a configuration of a reactive-current command generation unit according to Embodiment 2. Referring to Fig. 11, a reactive-current command generation unit 609C includes a subtractor 51, an AC-voltage controller 52, and a reactive-current regulator 53C. The subtractor 51 and the AC-voltage controller 52 are as described with respect to Fig. 7.

The reactive-current regulator 53C receives a determination signal Sa, and system status information, which indicates the system status of the AC system 12. The system status information is, for example, an activation-related status (e.g., information indicating the activation or deactivation) of system equipment (e.g., a static capacitor) included in the AC system 12 upon clearance of a fault. For example, in the event of a fault, a higher-level device estimates the activation-related status of the system equipment upon clearance of the fault, and transmits the information indicative of the activation-related status to the control device 3 as the system status information.

The reactive-current regulator 53C refers to the information table stored in an internal memory (e.g., a RAM 75, a ROM 76, an auxiliary storage 78) of the control device 3, and calculates the leading capacity (i.e., a capacitance component) of the AC system 12 after the fault is cleared, according to the received system information. The information table stores the leading capacity at respective system equipment.

Based on the determination signal Sa, the reactive-current regulator 53C limits a reactive-current command value Idref* generated by the AC-voltage controller 52 to output a lagging reactive-current command value Idref (i.e., a negative reactive-current command value Idref). Specifically, the reactive-current regulator 53C sets the limit range to a negative limit value Ine, based on the calculated leading capacity. In other words, the upper limit Idu and the lower limit Idd for the limit range are set to the negative limit value Ine. This causes the reactive-current regulator 53C to regulate the reactive-current command value Idref* to the negative limit value Ine, thereby causing the reactive-current regulator 53C to generate a reactive-current command value Idref (i.e., Ine = Idref) indicative of the negative limit value Ine. The negative limit value Ine is predetermined responsive to the leading capacity by simulation, for example.

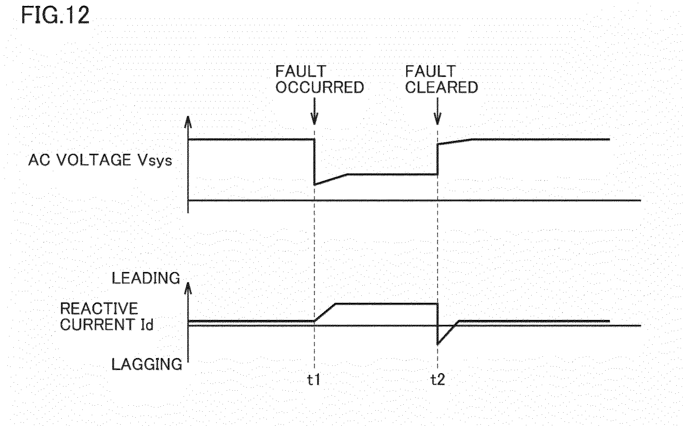

Fig. 12 is a diagram for illustrating a relationship between a reactive current and a system voltage, according to Embodiment 2. Referring to Fig. 12, in the event of a fault at time t1, an AC voltage Vsys decreases, and the AC-voltage controller 52 generates the leading reactive-current command value Idref*. At this time, the reactive-current regulator 53C does not limit the reactive-current command value Idref*. Thus, the leading reactive current Id is output from the power converter 2, increasing the AC voltage Vsys. Note that, by time t2 at which the fault is cleared, the reactive-current regulator 53C calculates the leading capacity of the AC system 12 after the fault is cleared, based on the received system conditions information.

At time t2, the fault is cleared. The fault determination unit 610 determines that the fault is cleared, and outputs the determination signal Sa having a value of "0." Upon receiving an input of the determination signal Sa having the value of "0," the reactive-current regulator 53C sets the limit range to the negative limit value Ine, based on the calculated leading capacity, and regulates the reactive-current command value Idref* to the negative limit value Ine. As a result, the reactive-current regulator 53C outputs the lagging reactive-current command value Idref. Thus, the reactive current Id output from the power converter 2 is a lagging reactive current, as shown in Fig. 12. This can prevent the development of overvoltage of the AC voltage Vsys.

Note that, similarly to Embodiment 1, the reactive-current regulator 53C may output the reactive-current command value Idref*(i.e., the lagging reactive-current command value Idref) regulated to the negative limit value Ine, until the elapse of the predetermined amount of time T1 since the fault in the AC system 12 has been cleared. As the predetermined amount of time T1 elapses, the reactive-current regulator 53C returns the upper limit to +∞, the lower limit to -∞, and cancels the limit for the reactive-current command value Idref*. This causes a gradual increase of the reactive current Id, and the AC voltage Vsys thus converges to an AC-voltage command value Vref.

Alternatively, if the fault in the AC system 12 is cleared, the reactive-current regulator 53C may regulate the reactive-current command value Idref* to the negative limit value Ine, and, subsequently, gradually increase over time the upper limit Idu of the limit range. In this case, after the fault is cleared, the reactive current Id increases gradually from around the negative limit value Ine. Note that the lower limit Idd for the limit range may be reduced gradually over time.

The configuration is described above in which the negative limit value Ine is used to limit the reactive-current command value Idref*. However, the reactive-current command value Idref* may be limited by instantly resetting, upon clearance of a fault, the leading component corresponding to the leading reactive current output during the fault, as the variation of Embodiment 1. In this case, the reactive-current regulator 53C sets the limit range to the negative limit value Ine, based on the calculated leading capacity, and regulates the limited reactive-current command value Idref* to the negative limit value Ine. As a result, the reactive-current regulator 53C outputs the lagging reactive-current command value Idref.

<Advantageous Effects>

According to Embodiment 2, development of overvoltage of the system voltage can be prevented, in view of the system conditions, in addition to the advantageous effects of Embodiment 1.

Embodiment 3.

Embodiment 3 will be described with reference to a configuration in which a reactive-current command value Idref is limited a predetermined amount of time after the event of a fault, and the limit is cancelled upon clearance of the fault. Embodiment 3 differs from Embodiment 1 in configuration of the reactive-current command generation unit.

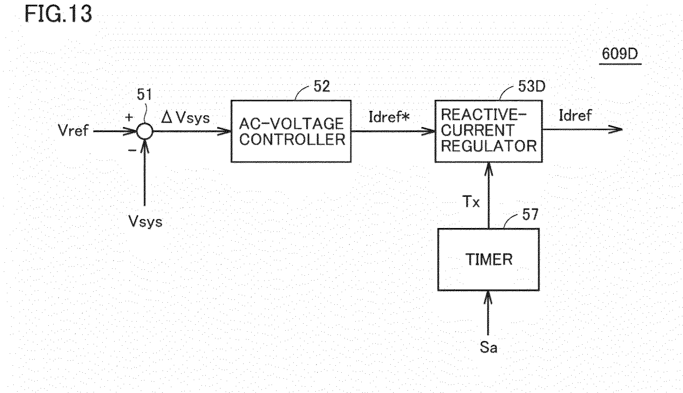

Fig. 13 is a block diagram showing a configuration of a reactive-current command generation unit according to Embodiment 3. Referring to Fig. 13, a reactive-current command generation unit 609D includes a subtractor 51, an AC-voltage controller 52, a reactive-current regulator 53D, and a timer 57. The subtractor 51 and the AC-voltage controller 52 are as described with respect to Fig. 7.

The timer 57 receives a determination signal Sa from a fault determination unit 610, and changes to an ON state or an OFF state, based on the determination signal Sa. In normal operation, the timer 57 is in the OFF state, and outputs a signal Tx having a value of "0."

If received the determination signal Sa having a value of " 1" indicating that the fault has occurred, the timer 57 changes from the OFF state to the ON state a predetermined amount of time T2 after the time of receipt of the determination signal Sa (i.e., the time of occurrence of the fault). Specifically, the timer 57 outputs the signal Tx having a value of " 1" the predetermined amount of time T2 after the event of the fault, and maintains the output of the signal Tx having a value of " 1" until the fault is cleared. If the fault is cleared and the timer 57 receives the determination signal Sa having a value of "0," the timer 57 changes from the ON state to the OFF state. Specifically, the timer 57 outputs the signal Tx having a value of "0."

Responsive to a value of the signal Tx from the timer 57, the reactive-current regulator 53D limits a reactive-current command value Idref* generated by the AC-voltage controller 52. Specifically, the reactive-current regulator 53D limits the reactive-current command value Idref* and generates the final reactive-current command value Idref if the timer 57 changes from the ON state to the OFF state (i.e., the value of the signal Tx changes from " 1" to "0"). Specifically, the reactive-current regulator 53D starts limiting the reactive-current command value Idref* the predetermined amount of time T2 after the event of the fault, and maintains the limitation until the fault is cleared. Then, once the fault is cleared, the reactive-current regulator 53D cancels the limitation of the reactive-current command value Idref*.

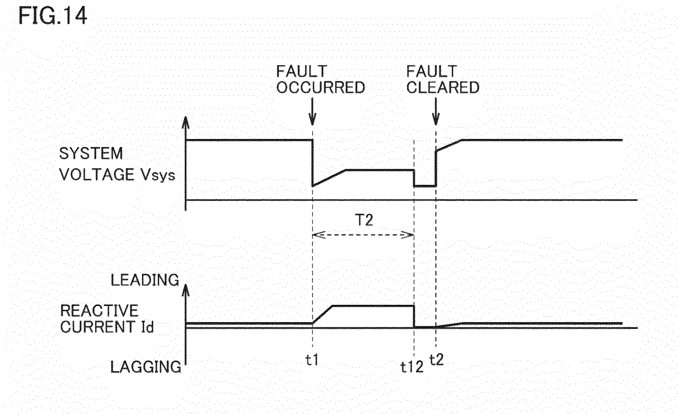

Fig. 14 is a diagram for illustrating a relationship between a reactive current and a system voltage, according to Embodiment 3. Referring to Fig. 14, in the event of a fault at time t1, an AC voltage Vsys decreases, and a leading reactive-current command value Idref* is generated by the AC-voltage controller 52. At this time, the timer 57 changes to the ON state, and the signal Tx having a value of " 1" is output to a reactive-current regulator 53C. Note that the reactive-current regulator 53C does not limit the reactive-current command value Idref*. Thus, the leading reactive current Id is output from the power converter 2, increasing the AC voltage Vsys.

At time t12 the predetermined amount of time T2 after time t1, the timer 57 changes from the ON state to the OFF state and the signal Tx having a value of "0" is output to the reactive-current regulator 53C. This causes the reactive-current regulator 53C to set the limit range to a predetermined value Ix or less to limit the reactive-current command value Idref*. Since the reactive-current regulator 53C outputs the reactive-current command value Idref corresponding to the predetermined value Ix, the reactive current Id output from the power converter 2 is around zero, as shown in Fig. 14.

As the fault is cleared at time t2, the fault determination unit 610 determines that the fault has been cleared, and outputs the determination signal Sa having a value of "0." The reactive-current regulator 53D cancels the limit for the reactive-current command value Idref*. Therefore, Idref* = Idref stands true, the reactive current Id is output from the power converter 2 in accordance with the reactive-current command value Idref, the AC voltage Vsys converges to the AC-voltage command value Vref, and a constant system voltage is maintained after the fault is cleared.

From the above, the reactive-current command generation unit 609D generates the reactive-current command value Idref* from the event of a fault in the AC system 12 until the elapse of the predetermined amount of time T2, so that the AC voltage Vsys of the AC system 12 follows the AC-voltage command value Vref. After the elapse of the predetermined amount of time T2, the reactive-current command generation unit 609D limits the reactive-current command value Idref*. The reactive-current command generation unit 609D cancels the limit for the reactive-current command value Idref* if the predetermined amount of time T2 has elapsed and the fault in the AC system 12 has been cleared.

According to the configuration of Fig. 13, the leading component corresponding to the leading reactive current output during the fault is reset prior to the clearance of the fault. Therefore, the development of overvoltage of the AC voltage Vsys upon the clearance of the fault, can be prevented.

While the foregoing describes the configuration in which the reactive-current command value Idref* is limited from time t12 to time t2, in accordance with the limit range set to the predetermined value Ix or less. However, the configuration according to the variation of Embodiment 1 may be adopted. For example, the reset unit 55A may limit the reactive-current command value Idref* by resetting the integration value of the integrator 522 from time t12 to time t2. Alternatively, the reset unit 55B may be configured to limit the reactive-current command value Idref* by resetting the filtering function (i.e., suspending the primary lag process) by the first-order lag controller 531 from time 112 to time t2.

<Advantageous Effects>

Embodiment 3 has the same advantageous effects as Embodiment 1.

Embodiment 4.

Embodiments 1 to 3 have been described above with reference to the configuration in which the leading reactive current Id is output during a fault. However, Embodiment 4 will be described with reference to a configuration in which a lagging reactive current Id is output during a fault. Embodiment 4 differs from Embodiment 1 in configuration of the reactive-current command generation unit.

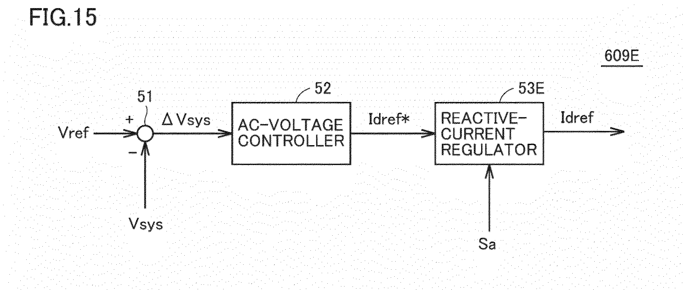

Fig. 15 is a block diagram showing a configuration of a reactive-current command generation unit according to Embodiment 4. Referring to Fig. 15, a reactive-current command generation unit 609E includes a subtractor 51, an AC-voltage controller 52, and a reactive-current regulator 53E. The subtractor 51 and the AC-voltage controller 52 are as described with respect to Fig. 7.

The reactive-current regulator 53E regulates a reactive-current command value Idref* generated by the AC-voltage controller 52, based on a determination signal Sa from a fault determination unit 610. Specifically, in the event of a fault, the AC-voltage controller 52 generates a leading reactive-current command value Idref*, based on a deviation ΔVsys. Upon receiving the determination signal Sa having a value of "1" due to the event of the fault, the reactive-current regulator 53E shifts the reactive-current command value Idref* greatly in the lagging direction and generates a lagging reactive-current command value Idref.

As the fault is cleared and the reactive-current regulator 53E receives the determination signal having a value of "0," the reactive-current regulator 53E stops shifting the reactive-current command value Idref* in the lagging direction. In other words, the reactive-current regulator 53E outputs the reactive-current command value Idref* as the final reactive-current command value Idref.

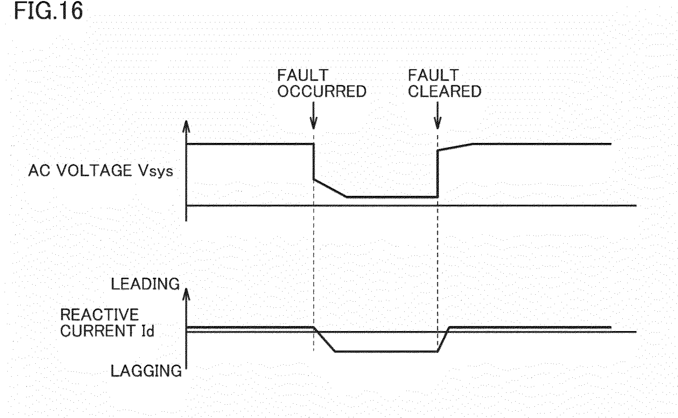

Fig. 16 is a diagram for illustrating a relationship between a reactive current and a system voltage, according to Embodiment 4. Referring to Fig. 16, in the event of a fault at time t1, an AC voltage Vsys decreases, and the leading reactive-current command value Idref* is generated by the AC-voltage controller 52. Based on the determination signal Sa having a value of "1" indicating that a fault has occurred, the reactive-current regulator 53E shifts the reactive-current command value Idref* greatly in the lagging direction and generates the lagging reactive-current command value Idref. This causes the lagging reactive current Id to be output from the power converter 2, as shown in Fig. 16. Accordingly, the AC voltage Vsys further decreases.

As the fault is cleared at time t2, the reactive-current regulator 53E stops regulating the reactive-current command value Idref*, based on the determination signal Sa having a value of "0." Therefore, Idref* = Idref holds true, and the reactive current Id is output from the power converter 2, in accordance with the reactive-current command value Idref. This causes the AC voltage Vsys to converge to an AC-voltage command value Vref.

In a certain aspect, the reactive-current regulator 53E may be configured to regulate the reactive-current command value Idref* so that the lagging reactive current is output from the power converter 2 until the elapse of a predetermined amount of time T3 since the fault in the AC system 12 has been cleared. In this case, the reactive-current regulator 53E stops regulating the reactive-current command value Idref (i.e., shifting the reactive-current command value Idref in the lagging direction) after the elapse of the predetermined amount of time T3.

As noted above, in the event of a fault in the AC system 12, the reactive-current command generation unit 609E generates the reactive-current command value Idref so that the lagging reactive current is output from the power converter 2. Then, if the fault in the AC system 12 is cleared, the reactive-current command generation unit 609E shifts the reactive-current command value Idref in the leading direction. This can cause the AC voltage Vsys to converge to the AC-voltage command value Vref, while preventing the development of overvoltage of the AC voltage Vsys.

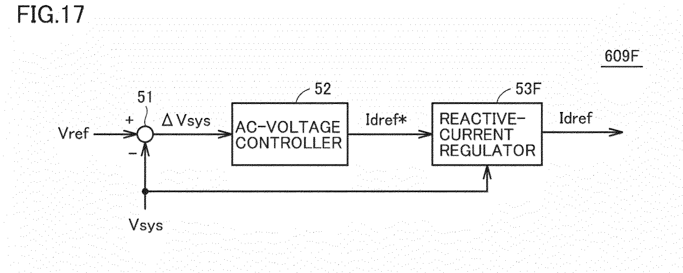

Fig. 17 is a block diagram showing a configuration of a reactive-current command generation unit according to a variation of Embodiment 4. Referring to Fig. 17, a reactive-current command generation unit 609F includes the subtractor 51, the AC-voltage controller 52, and a reactive-current regulator 53F. The subtractor 51 and the AC-voltage controller 52 are as described with respect to Fig. 7. Note that the reactive-current command generation unit 609F differs from the other reactive-current command generation unit described above in that the reactive-current command generation unit 609F does not use the determination signal Sa from the fault determination unit 610.

The reactive-current regulator 53F does not regulate the reactive-current command value Idref* generated by the AC-voltage controller 52 if the AC voltage Vsys is greater than or equal to a threshold Th1. In other words, the reactive-current regulator 53F outputs the reactive-current command value Idref* as the final reactive-current command value Idref. If the AC voltage Vsys is less than the threshold Th1, in contrast, the reactive-current regulator 53C shifts the reactive-current command value Idref* greatly in the lagging direction and generates the lagging reactive-current command value Idref.

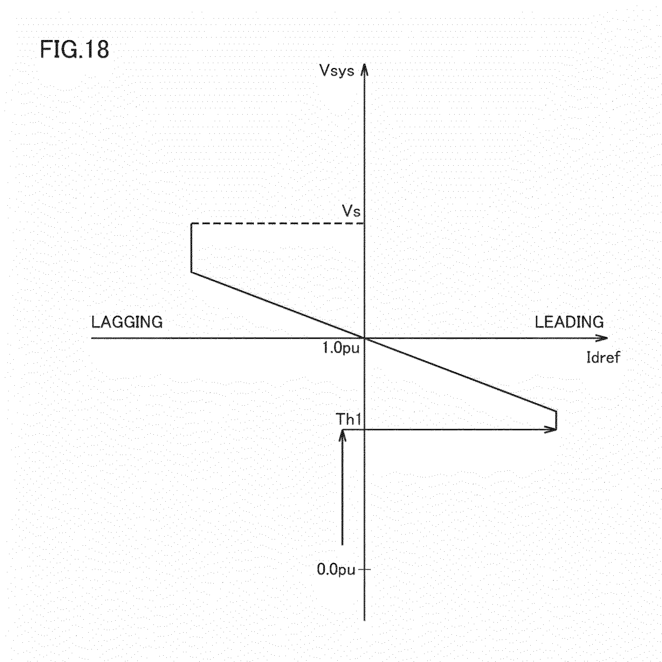

Fig. 18 is a diagram for illustrating a relationship between the AC voltage and the reactive-current command value, according to the variation of Embodiment 4. Referring to Fig. 18, if the AC voltage Vsys is greater than or equal to the threshold Th1, the reactive-current regulator 53F does not regulate the reactive-current command value Idref*. Therefore, the reactive-current command value Idref is the reactive-current command value Idref* generated by the AC-voltage controller 52. Specifically, if the AC voltage Vsys is greater than or equal to the threshold Th1 and less than 1.0pu (i.e., the AC-voltage command value Vref), the leading reactive-current command value Idref is output in order to increase the AC voltage Vsys. If the AC voltage Vsys is greater than 1.0pu, in contrast, the lagging reactive-current command value Idref is output in order to reduce the AC voltage Vsys. Note that the power converter 2 is gate-blocked if the AC voltage Vsys is greater than or equal to the voltage Vs.

In the example of Fig. 18, the AC-voltage command value Vref is 1.0pu. However, depending on the conditions for system operation, the AC-voltage command value Vref may be less than or equal to 1.0pu (e.g., 0.95).

If the AC voltage Vsys is less than the threshold Th1, the reactive-current regulator 53F shifts the reactive-current command value Idref* in the lagging direction and outputs the lagging reactive-current command value Idref that has a defined magnitude. This results in the relationship between the AC voltage Vsys and the reactive current Id as shown in Fig. 16.

As noted above, if the AC voltage Vsys is greater than or equal to the threshold Th1, the reactive-current command generation unit 609F generates the reactive-current command value Idref so that the AC voltage Vsys follows the AC-voltage command value Vref. If the AC voltage Vsys is less than the threshold Th1, the reactive-current command generation unit 609F generates the reactive-current command value Idref so that the lagging reactive current Id is output from the power converter 2. This can cause the AC voltage Vsys to converge to the AC-voltage command value Vref, while preventing the development of overvoltage of the AC voltage Vsys, thereby maintaining a constant system voltage after the fault is cleared.

<Advantageous Effects>

According to Embodiment 4, even though the AC voltage Vsys is further reduced during a fault, a constant AC voltage Vsys can be maintained after the fault is cleared, while preventing the development of overvoltage of the AC voltage Vsys upon the clearance of the fault.

Other Embodiments.

(1) While the above-described embodiments have been described with reference to the power converter 2 being modular multilevel converters, the present disclosure is not limited thereto. For example, the circuit scheme of the power converter 2 may be configured of a 2-level converter which converts AC power into two levels of DC power or a 3-level converter which converts the AC power into three levels of DC power.

(2) the power conversion device described above can be used as a power conversion device for a power system such as HVDC (High Voltage Direct Current), STATCOM (Static Synchronous Compensator), and SVC (Static Var Compensator).

The configurations exemplified as the above-described embodiments are one example configuration of the present disclosure, and can be combined with another known technique, or can be modified, such as by omitting part of the configuration, without departing from the spirit of the present disclosure. Moreover, in the above-described embodiments, the processes and configurations described in the other embodiments may be appropriately adopted and implemented.

The presently disclosed embodiments should be considered in all aspects as illustrative and not restrictive. The scope of the present disclosure is defined by the appended claims, rather than by the description above. All changes which come within the meaning and range of equivalency of the appended claims are to be embraced within their scope.

REFERENCE SIGNS LIST

1 power conversion device; 2 power converter; 3 control device; 4u, 4v, 4w leg circuit; 5 upper arm; 6 lower arm; 7 sub module; 8A, 8B reactor; 9A, 9B arm-current detector; 10 AC-voltage detector; 11A, 11B DC-voltage detector; 12 AC system; 13 transformer; 14 DC circuit; 16 AC-current detector; 31 switching element; 32 capacitor; 33 voltage detector; 42 reactive-current controller; 44 active-current controller; 45 two-phase/three-phase converter; 52, 52A, 52B AC-voltage controller; 53 reactive-current regulator; 55A, 55B reset unit; 57 timer; 70 input converter; 71 sample and hold circuit; 72 multiplexer; 75 RAM; 76 ROM; 77 I/O interface; 78 auxiliary storage; 79 bus; 502 basic control unit; 503 arm control unit; 521 proportioner; 522 integrator; 523 adder; 531 first-order lag controller; 601 arm-current command generation unit; 603 AC control unit; 604 DC control unit; 605 circulation-current control unit; 606 command calculation unit; 608 active-power control unit; 609 reactive-current command generation unit; 610 fault determination unit; and 611 capacitor-voltage command generation unit.

**Claims**

1. A power conversion device, comprising:

   a power converter that converts power between an alternating-current (AC) system and a direct-current (DC) circuit; and
   a control device that controls the power converter, wherein
   the control device includes:

      a command generation unit for generating a reactive-current command value for the power converter, based on an AC voltage of the AC system and an AC-voltage command value; and
      a fault determination unit for determining presence or absence of occurrence of a fault in the AC system, based on the AC voltage, wherein

   when the fault occurred in the AC system has been cleared, the command generation unit generates the reactive-current command value so that a reactive current output from the power converter is limited.

2. The power conversion device according to claim 1, wherein
   the command generation unit includes:

      an AC-voltage control unit for generating the reactive-current command value so that the AC voltage of the AC system follows the AC-voltage command value; and
      a reactive-current regulation unit for limiting the reactive-current command value generated by the AC-voltage control unit to a limit range, when the fault occurred in the AC system has been cleared.

3. The power conversion device according to claim 2, wherein
   the reactive-current regulation unit limits the reactive-current command value within the limit range that is set to a predetermined value or less, until an elapse of a predetermined amount of time since the fault in the AC system has been cleared.

4. The power conversion device according to claim 2, wherein
   when the fault in the AC system has been cleared, the reactive-current regulation unit sets the limit range to a predetermined value or less, and, subsequently, gradually increases over time an upper limit for the limit range.

5. The power conversion device according to claim 2, wherein
   based on a leading capacity of the AC system, the reactive-current regulation unit sets the limit range to a negative limit value, and regulates the reactive-current command value to the negative limit value.

6. The power conversion device according to claim 5, wherein
   the reactive-current regulation unit outputs the reactive-current command value regulated to the negative limit value, until an elapse of a predetermined amount of time since the fault in the AC system has been cleared.

7. The power conversion device according to claim 5, wherein
   when the fault in the AC system has been cleared, the reactive-current regulation unit regulates the reactive-current command value to the negative limit value, and, subsequently, gradually increases over time an upper limit for the limit range.

8. The power conversion device according to claim 1, wherein

the command generation unit includes an AC-voltage control unit for generating the reactive-current command value so that the AC voltage of the AC system follows the AC-voltage command value, wherein
the AC-voltage control unit is configured of a feedback controller which includes a proportioner and an integrator,
the command generation unit further includes a reset unit for resetting an integration value of the integrator, and
when the fault in the AC system has been cleared, the reset unit resets the integration value to limit the reactive-current command value.

9. A power conversion device, comprising:

a power converter that converts power between an alternating-current (AC) system and a direct-current (DC) circuit; and
a control device that controls the power converter, wherein
the control device includes:

a command generation unit for generating a reactive-current command value for the power converter, based on an AC voltage of the AC system and an AC-voltage command value; and
a fault determination unit for determining presence or absence of occurrence of a fault in the AC system, based on the AC voltage, wherein

the command generation unit:

generates the reactive-current command value so that the AC voltage of the AC system follows the AC-voltage command value, until an elapse of a predetermined amount of time since the occurrence of the fault in the AC system;
limits the reactive-current command value after the elapse of the predetermined amount of time; and
cancels limiting the reactive-current command value, after the elapse of the predetermined amount of time and when the fault in the AC system has been cleared.

10. A power conversion device, comprising:

a power converter that converts power between an alternating-current (AC) system and a direct-current (DC) circuit; and

a control device that controls the power converter, wherein
the control device includes:

a command generation unit for generating a reactive-current command value for the power converter; and
a fault determination unit for determining presence or absence of occurrence of a fault in the AC system, based on the AC voltage of the AC system, wherein

upon the occurrence of the fault in the AC system, the command generation unit generates the reactive-current command value so that a lagging reactive current is output from the power converter, and
when the fault occurred in the AC system has been cleared, the command generation unit shifts the reactive-current command value in a leading direction.

11. The power conversion device according to claim 10, wherein

the command generation unit includes:

an AC-voltage control unit for generating the reactive-current command value so that the AC voltage of the AC system follows an AC-voltage command value; and
a reactive-current regulation unit for regulating the reactive-current command value generated by the AC-voltage control unit, wherein

the reactive-current regulation unit:

regulates the reactive-current command value so that a lagging reactive current is output from the power converter, until an elapse of a predetermined amount of time since the fault in the AC system has been cleared; and
stops regulating the reactive-current command value after the elapse of the predetermined amount of time.

12. A power conversion device, comprising:

a power converter that converts power between an alternating-current (AC) system and a direct-current (DC) circuit; and
a control device that controls the power converter, wherein
the control device includes a command generation unit for generating a reactive-current command value for the power converter; and

the command generation unit:

generates, when the AC voltage is greater than or equal to a threshold, the reactive-current command value so that the AC voltage of the AC system follows an AC-voltage command value; and

generates, when the AC voltage is less than the threshold, the reactive-current command value so that a lagging reactive current is output from the power converter.

FIG.1

FIG.2

(a)

(b)

FIG.3

# FIG.4

CONTROL DEVICE 3

502

502U — U-PHASE BASIC CONTROL UNIT
→ 503UP — U-PHASE UPPER ARM CONTROL UNIT
→ 503UN — U-PHASE LOWER ARM CONTROL UNIT

502V — V-PHASE BASIC CONTROL UNIT
→ 503VP — V-PHASE UPPER ARM CONTROL UNIT
→ 503VN — V-PHASE LOWER ARM CONTROL UNIT

502W — W-PHASE BASIC CONTROL UNIT
→ 503WP — W-PHASE UPPER ARM CONTROL UNIT
→ 503WN — W-PHASE LOWER ARM CONTROL UNIT

503

# FIG.5

Idc → DC CONTROL UNIT (604) → Vrdc

Pref, Pac → ACTIVE-POWER CONTROL UNIT (608) → Idcref, Iqref

Vref, Vsys → REACTIVE-CURRENT COMMAND GENERATION UNIT (609) → Idref

Id, Iq

AC CONTROL UNIT (603) → Vrac

Vsn

Izref, Iz → CIRCULATION-CURRENT CONTROL UNIT (605) → Vrz

COMMAND CALCULATION UNIT (606) → Krefp, Krefn

601

502

Sa

Vsys → FAULT DETERMINATION UNIT (610)

Vc FROM UPPER ARM — Ncell
Vc FROM LOWER ARM — Ncell

CAPACITOR-VOLTAGE COMMAND GENERATION UNIT (611) → Vcrefp, Vcrefn

EP 4 443 732 A1

21

FIG.6

603

FIG.7

609

Vref $\xrightarrow{+}$ 51 $\xrightarrow{\Delta\text{Vsys}}$ 52 AC-VOLTAGE CONTROLLER $\xrightarrow{\text{Idref}*}$ 53 REACTIVE-CURRENT REGULATOR $\xrightarrow{\text{Idref}}$

Vsys

Sa

FIG.8

FIG.9

609A

52A

51    ΔVsys                    521              523    Idref

Vref  +                          Kp                +

  −

Vsys

                                  Ki
                                  ──
                                   s              +

                                  522

55A

RESET
UNIT

Sa

# FIG.10

FIG.11

<u>609C</u>

```
                                        52                        53C
                                  ┌──────────────┐          ┌──────────────┐
         +   ΔVsys                │  AC-VOLTAGE  │  Idref*   │  REACTIVE-   │  Idref
Vref ───→(  )──────────────────→ │  CONTROLLER  │─────────→ │  CURRENT     │────────→
         -  ↑   51                └──────────────┘          │  REGULATOR   │
            │                                               └──────────────┘
            │                                                   ↑      ↑
            Vsys                                               Sa  SYSTEM
                                                                   CONDITIONS
```

FIG.12

# FIG.13

FIG.14

FIG.15

609E

Vref $\longrightarrow$ (+/−) 51 $\Delta$Vsys $\longrightarrow$ | AC-VOLTAGE CONTROLLER | 52 Idref* $\longrightarrow$ | REACTIVE-CURRENT REGULATOR | 53E Idref $\longrightarrow$

Vsys

Sa

31

EP 4 443 732 A1

FIG.16

FAULT
OCCURRED

FAULT
CLEARED

AC VOLTAGE Vsys

LEADING

REACTIVE
CURRENT Id

LAGGING

32

FIG.17

609F

Vref $\longrightarrow$ + $\bigcirc$ $\Delta$Vsys $\longrightarrow$ | AC-VOLTAGE CONTROLLER | Idref* $\longrightarrow$ | REACTIVE-CURRENT REGULATOR | $\longrightarrow$ Idref

51

52

53F

Vsys

FIG.18

## INTERNATIONAL SEARCH REPORT

International application No.

**PCT/JP2021/044448**

| A. | CLASSIFICATION OF SUBJECT MATTER |
|---|---|

*H02M 7/48*(2007.01)i; *H02M 7/49*(2007.01)i
FI: H02M7/48 R; H02M7/49

According to International Patent Classification (IPC) or to both national classification and IPC

| B. | FIELDS SEARCHED |
|---|---|

Minimum documentation searched (classification system followed by classification symbols)

H02M7/48; H02M7/49

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-10203 A (INST NAT COLLEGES TECH JAPAN) 18 January 2016 (2016-01-18) abstract, paragraphs [0023]-[0083], fig. 1-5 | 1 |
| A | | 2-12 |
| A | JP 2018-82569 A (TABUCHI DENKI KK) 24 May 2018 (2018-05-24) entire text, all drawings | 1-12 |
| A | JP 2020-188614 A (FUJI ELECTRIC CO LTD) 19 November 2020 (2020-11-19) entire text, all drawings | 1-12 |
| A | JP 2019-149850 A (FUJI ELECTRIC CO LTD) 05 September 2019 (2019-09-05) entire text, all drawings | 1-12 |
| A | JP 6-175741 A (MITSUBISHI ELECTRIC CORP) 24 June 1994 (1994-06-24) entire text, all drawings | 1-12 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 February 2022** | **22 February 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/044448**

| Patent document cited in search report | | | Publication date (day/month/year) | Patent family member(s) | Publication date (day/month/year) |
|---|---|---|---|---|---|
| JP | 2016-10203 | A | 18 January 2016 | (Family: none) | |
| JP | 2018-82569 | A | 24 May 2018 | (Family: none) | |
| JP | 2020-188614 | A | 19 November 2020 | (Family: none) | |
| JP | 2019-149850 | A | 05 September 2019 | (Family: none) | |
| JP | 6-175741 | A | 24 June 1994 | US 5438253 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5173654 A